(19) **Europäisches Patentamt**
**European Patent Office**
**Office européen des brevets**

(11) **EP 2 851 241 B1**

(12) **EUROPEAN PATENT SPECIFICATION**

(45) Date of publication and mention
of the grant of the patent:
**30.05.2018 Bulletin 2018/22**

(51) Int Cl.:
**B60P 3/22** *(2006.01)*  **B65D 90/34** *(2006.01)*

(21) Application number: **14185528.8**

(22) Date of filing: **19.09.2014**

(54) **Method for safely managing flammable substances**

Verfahren zur sicheren Handhabung entzündlicher Substanzen

Procédé permettant de gérer en sécurité des substances inflammables

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2013 IT PD20130254**

(43) Date of publication of application:
**25.03.2015 Bulletin 2015/13**

(73) Proprietors:
• **Jurop S.p.A.**
**33082 Azzano Decimo (Prov. of Pordenone) (IT)**
• **S.A.R.L. Haute Pression Vide**
**62670 Mazingarbe (FR)**

(72) Inventors:
• **Santarossa, Danilo**
**33082 Azzano Decimo (IT)**
• **Corby, Jean Pierre**
**62400 Bethune (FR)**

(74) Representative: **De Bortoli, Tiziano et al
Notarbartolo & Gervasi S.p.A.
Corso di Porta Vittoria, 9
20122 Milano (IT)**

(56) References cited:
**EP-A1- 1 548 195     EP-A1- 2 181 888
FR-A1- 2 839 493**

**Description**

FIELD OF THE INVENTION

The present invention relates to a method for safely managing flammable substances, in particular contained in tank vehicles suitable for transporting such hazardous substances.

BACKGROUND ART

The products normally loaded into tank vehicles for road transport (e.g. waste in solid, liquid or gaseous state) can generate flammable gases and thereby explosive atmospheres which during handling, or as a result of malfunctioning valves or during an inspection or in any other operating condition can generate hazardous areas in the external environment close to the vehicle, or areas where the lower explosive limit may be reached.

To avoid generating explosive areas, it is known to monitor the concentration of hazardous substances by means of sensors for the measurement of concentration. A solution of this kind is for example described in the prior document FR 2839493.

However, such a solution is not regarded as optimal since such sensors have non-negligible costs and require the relevant maintenance.

SUMMARY OF THE INVENTION

Specific task of the present invention is to provide a method for controlled management of the explosive mixture without the need to directly measure the concentration of the hazardous substances.

Such an object is achieved by a method for safely managing flammable substances contained in a transport vehicle, said vehicle comprising at least one volume to be ventilated $V_v$ susceptible of containing a mixture of explosive vapours or gases, said method comprising the steps of:

- putting said volume to be ventilated $V_v$ into communication with the atmosphere;
- calculating an explosive mixture flow rate $Q_{dan}$ emitted in a liquid and/or solid phase by said flammable substances in contact with said volume to be ventilated $V_v$;
- actuating a pumping circuit for aspirating an intake flow rate $Q_p$ from said volume to be ventilated $V_v$;
- maintaining said intake flow rate $Q_p$ for a purging time $t_c$ calculated by means of the following ratio:

$$t_c \geq \frac{V_v \cdot n}{Q_p - Qdan} \cdot \frac{1}{60}$$

wherein n is a purging number higher than or equal to 10.

Specifically, when the volume to be ventilated corresponds to the upper portion of the vehicle's tank, after the purging time it is possible to stop said pumping circuit and empty the tank. In this case, a step of waiting wherein the tank is isolated from the external atmosphere is optionally provided between the steps of stopping the pumping circuit and of emptying said tank, said step of waiting being maintained for a maximum waiting time $t_a$ calculated by means of the following ratio:

$$t_a = \frac{V_v}{Qdan}$$

BRIEF DESCRIPTION OF THE DRAWINGS

Further features and advantages of the invention will appear more clearly from the detailed description of preferred, but not exclusive, embodiments of a method for safely unloading flammable substances according to the present invention, shown by way of a non-limiting example with the aid of the accompanying drawings, in which:

- Figure 1 is a partial diagram of a vehicle for transporting and unloading flammable substances manageable using the method of the present invention;
- Figure 2 is a detailed diagram of a component of the diagram in Figure 1.

DETAILED DESCRIPTION OF THE INVENTION

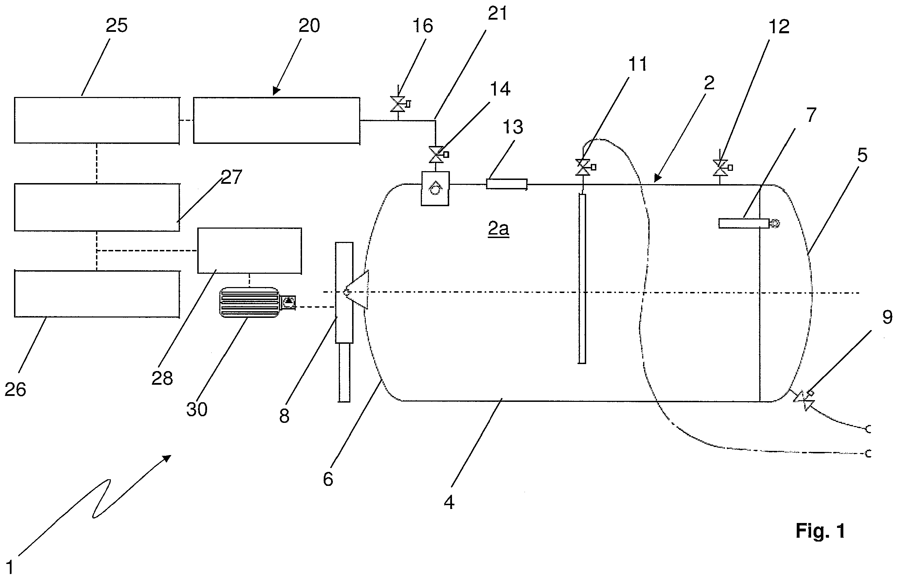

The accompanying figure 1 partially schematically shows a vehicle 1 for transporting hazardous substances, such as muddy waste. Vehicle 1 includes a tank 2 elongated in shape according to a longitudinal axis X, consisting mainly of a cylindrical skirt 4 and two axially opposite rounded bottoms 5, 6. Tank 2 has a total volume equal to V and may be used to hold and transport hazardous substances susceptible of forming mixtures of explosive gases or vapours in at least one upper portion 2a of tank 2. The volume of the upper portion 2a corresponds to a volume to be ventilated $V_v$.

The first curved bottom 5 may be opened by a plurality of hydraulic cylinders 7 (only one cylinder 7 is shown in the diagram in figure 1) interposed between the first curved bottom 5 and the cylindrical skirt 4. The second curved bottom 6 is connected to a tipping hydraulic cylinder 8 which may be used for tilting tank 2 and subsequently emptying it through a lower loading/unloading valve 9 located in the lower side of the first curved bottom 5. The same lower loading/unloading valve 9 may also be used for charging tank 2 from the bottom. The loading or unloading of tank 2 may alternatively be through an upper loading/unloading valve 11 located in the upper side of skirt 4.

On the upper side of skirt 4 there are also provided:

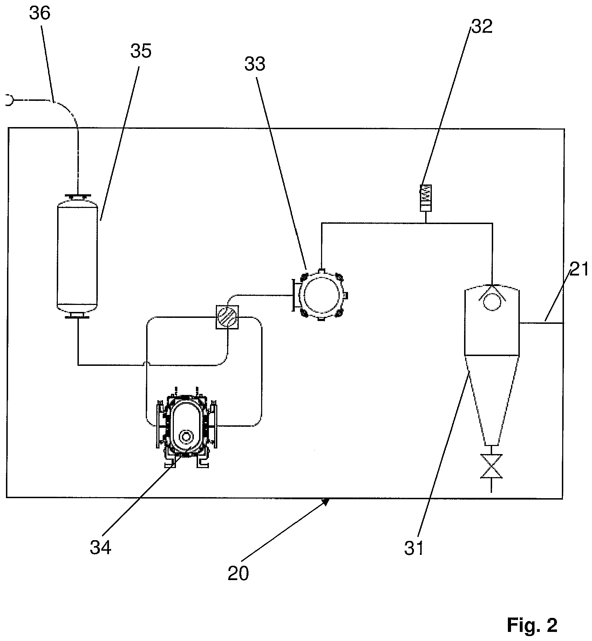

- a first purging valve 12 for connecting the upper portion 2a of tank 2 with the atmosphere;
- a manhole 13 for inspecting tank 2.
- an intercepting valve 14 for connecting tank 2 to a pumping circuit 20 (figure 2).

A pumping line 21 is provided between the pumping circuit 20 and the intercepting valve 14, provided with a second purging valve 16 for connecting the pumping line 21 with the atmosphere.

The pumping circuit 20 is connected, for the actuation thereof, to engine 25 of vehicle 25. Engine 25 is further connected to an electrical accumulator 26. An electrical circuit breaker 27 is interposed between engine 25 and the electric accumulator 26 for allowing the latter to be optionally isolated from engine 25 and from the electrical system of vehicle 1. The electrical accumulator 26, through a selector 28, allows supplying an electro-hydraulic control unit 30 connected to the tipping hydraulic cylinder 8 for controlling the tilting of tank 2. The presence of the electrical circuit breaker 27 and of selector 28 allow carrying out the operations of unloading of vehicle 1 (e.g.: opening the loading/unloading valve 9 and tilting tank 2) with engine 25 off and isolated electrical system of vehicle 1 (by actuating the electrical circuit breaker 27). This operating mode allows eliminating any risk of ignition induced by the electro-hydraulic components installed in vehicle 1.

The pumping circuit 20 upstream of the pumping line 21, includes, respectively in series:

- a cyclone filter 31;
- a pressure control valve 32;
- an air filter 33;
- a pump 34;
- an unloading silencer 35;
- an unloading line 36.

The pumping circuit 20 is not structurally and functionally described in more detail being per se known and conventional. For the purposes of the present invention, the pumping circuit 20 may also be of a different type, provided it is capable of generating a suction flow rate $Q_p$ from the pumping line 21.

The method of the present invention is based on the execution of a fixed number n (purging number) of atmospheric air change in the upper portion 2a of tank 2, so that the gaseous mixture contained therein is diluted until conditions are reached which are certainly not hazardous from the point of view of flammability and explosiveness.

This is achieved through the opening of the first purging valve 12 and of the tank intercepting valve 14 and the concurrent operation of the pumping circuit 20 in suction mode, with generation of the flow rate $Q_p$, for a purging time $t_c$ corresponding to the predetermined n number of air changes.

Alternatively, according to another embodiment variant of the present invention, if a higher flow rate of incoming atmospheric air is required, the first curved bottom 5 is opened by actuating the hydraulic cylinders 7.

Number n is set equal to 10 (or higher than 10). Such a value is determined starting from the initial assumption that the emission of hazardous vapours from the sludge in tank 2 during the purging time $t_c$ is not significant compared to the amounts extracted through the generation of the flow rate $Q_p$. It was estimated (table 1) that a purging number equal to 10 is sufficient to ensure a final concentration of explosive gases or vapors inside the tank lower than 0.2% by volume compared to the atmospheric air.

Table 1

| n | Concentration |
|---|---|
| 0 | 100% |
| 1 | 50% |
| 2 | 25% |
| 3 | 12.5% |
| 4 | 6.3% |
| 5 | 3.2% |
| 6 | 1.6% |
| 7 | 0.8% |
| 8 | 0.4% |
| 9 | 0.2% |
| 10 | 0.1% |

The definition of the purging number n conservatively considers that the suction of an amount of vapours or gases from tank 2 equal to volume V (upper portion 2a coincident with the entire inside volume of tank 2), resulting in the introduction of clean air, causes a reduction in the inside concentration equal to 50% of the initial concentration. The conclusion is conservative since we start from the assumption that the initial concentration of vapor volume is equal to 100% of the available volume V, that the volume available for gases or vapours is the entire tank volume and that the clean air replaces the mixture present inside the tank by a percentage not exceeding 50%. The introduction of a second volume of air equal to volume V of tank 2 causes an effect of further division of inside concentration of the mixture that is therefore reduced to 25%, and going on (table 1), a concentration of 0.1% is reached after the introduction of the tenth air volume.

The above allows having a final concentration of gas inside the tank volume which is less than or equal to a quarter of the lower explosive limit (LEL) for gases which comply with the following ratio A:

$$\text{LEL} \leq 0.8\% \qquad\qquad (A)$$

Ratio A is respected by all the gases of interest for the purposes of the present invention, being 0.8% the LEL of octane.

The hypothesis proposed above, i.e. that the emission of flammable vapours from sludge in tank 2 during the purging time $t_c$ is not significant, is not realistic but it is necessary to quantify an emission flow rate of vapor or gas $Q_g$, generated by the liquid or solid phases of said flammable substances in contact with the upper portion 2a which contains the gases or vapours. Such a calculation may be done using regulatory models (IEC EN 60079-10-1: 2008 concerning the classification of places with explosive atmospheres and CEI 31-35:2012 National guide to IEC EN 60079-10-1) and making some conservative assumptions:

- transport of pure liquid substance with particularly low lower explosive limit (LEL 0.8%), relatively low flashpoint temperature (13 °C) and relatively high vapor pressure (1544 Pa at 20 °C) (the figures given are related to octane);
- maximum permissible temperature for the liquid phase equal to 50 °C.
- the liquid inside tank 2 is deemed to be contained in a pool having defined boundaries (the walls of the tank) and touched by the atmospheric air used for the purging itself.

On the basis of formula GB 4.4-1 of CEI 31-35:2012, the following is calculated:

$$Q_g = 2 \cdot 10^{-3} \cdot S \cdot \frac{w_a}{f_{SE}} \cdot r_{eq}^{-0,11} \frac{M \cdot p_a}{R \cdot T} \ln\left(\frac{p_a}{p_a - p_v}\right)$$

wherein:

**4**

- S is the liquid free surface;
- $w_a$ is the velocity of the air that touches the liquid;
- $f_{SE}$ is the ventilation effectiveness factor assumed to be equal to 1 in consideration that there are significant obstacles to air circulation inside the tank;
- M is the molar mass of the substance considered;
- $p_a$ is atmospheric pressure;
- $p_v$ is the vapor pressure at the temperature considered;
- R is the ideal gas constant;
- T is the absolute temperature in Kelvin degrees of the liquid;
- $r_{eq}$ corresponds to twice the surface of the liquid divided by its perimeter.

The purging time $t_c$ may be calculated as:

$$t_c \geq \frac{V_v \cdot n}{Q_p - Qdan} \cdot \frac{1}{60} \qquad (B)$$

wherein $Q_{dan}$ is the explosive mixture flow rate calculated by multiplying $Q_g$ by 100 (an explosive mixture to 1% is conservatively assumed) and by a safety factor m greater than or equal to 1 (m is typically set equal to 4).

Upon completion of the purging operation, the pumping circuit 20 is stopped and the valves to the outside of tank 2 are closed (loading/unloading valves 9, 11, purging valve 12 and intercepting valve 14) so that tank 2 is isolated from the external atmosphere. In this operating condition, the model described in the previous paragraph for determining the vapor emission flow rate is still applicable. The opening of the tank 2 and the consequent must be carried out within an opening time limit $t_a$ to prevent the new formation of the explosive mixture.

Such a time limit $t_a$ is calculable by means of:

$$t_a = \frac{V_v}{Qdan} \qquad (C)$$

Ratio B may also be used to calculate a second purging time $t_v$ for washing the pumping line 21 and the pumping circuit 20, i.e. for the dilution of the explosive gases therein due to the dilution process of the explosive mixture present in tank 2. This is obtained by opening the second purging valve 16, closing the intercepting valve 14 and at the same time by actuating the pumping circuit 20 in suction mode for a time $t_v$ equal to:

$$t_v \geq \frac{V_l \cdot n}{Q_p} \cdot \frac{1}{60} \qquad (D)$$

wherein the volume to be ventilated in this case is the overall volume $V_l$ of the pumping line 21 and of the pumping circuit 20. It is clear that ratio D corresponds to B, setting $V_v = V_l$ and $Q_g = 0$.

The method of the present invention therefore allows the achievement of the objects set out with reference to the above-mentioned prior art, allowing a fully safe operation of tank 2 without using sensors for the measurement of concentration.

**Claims**

1.    A method for safely managing flammable substances contained in a transport vehicle (1), said vehicle (1) comprising at least one volume to be ventilated ($V_v$) susceptible of containing a mixture of explosive vapours or gases, said method comprising the steps of:

- putting said volume to be ventilated ($V_v$) into communication with the atmosphere;
- calculating an explosive mixture flow rate ($Q_{dan}$) emitted in a liquid and/or solid phase by said flammable substances in contact with said volume to be ventilated ($V_v$);
- actuating a pumping circuit (20) for aspirating an intake flow rate ($Q_p$) from said volume to be ventilated ($V_v$);
- maintaining said intake flow rate ($Q_p$) for a purging time ($t_c$) calculated by means of the following ratio:

$$t_c \geq \frac{V_v \cdot n}{Q_p - Qdan} \cdot \frac{1}{60} \qquad\qquad (B)$$

wherein n is a purging number higher than or equal to 10.

**2.** A method according to claim 1, wherein said volume to be ventilated ($V_v$) is an upper portion (2a) of a tank (2) of said vehicle (1), wherein said step of putting said upper portion (2a) into communication with the atmosphere is actuated by opening a purging valve (12) or a bottom (5) of said tank (2) and wherein said pumping circuit (20) is put into communication with said upper portion (2a) by opening an intercepting valve (14).

**3.** A method according to claim 1, wherein said volume to be ventilated ($V_v$) is the total volume ($V_l$) of a pipe to be ventilated, wherein said step of putting said volume to be ventilated ($V_l$) into communication with the atmosphere is actuated by opening a second purging valve (16) and wherein said pumping circuit (20) is isolated from a tank (2) containing said flammable substances by closing an intercepting valve (14).

**4.** A method according to claim 2, wherein said method comprises the further steps of stopping said pumping circuit (20) and emptying said tank (2).

**5.** A method according to claim 4, wherein a step of waiting wherein said tank (2) is isolated from the external atmosphere is provided between said steps of stopping said pumping circuit (20) and of emptying said tank (2), said step of waiting being maintained for a maximum waiting time ($t_a$) calculated by means of the following ratio:

$$t_a = \frac{V_v}{Qdan} \qquad\qquad (C)$$

**Patentansprüche**

**1.** Verfahren zur sicheren Handhabung entzündlicher Substanzen, die in einem Transportfahrzeug (1) aufgenommen sind, wobei das Transportfahrzeug (1) zumindest ein ventiliertes Volumen ($V_v$) aufweist, in welchem eine Mischung von explosiven Dämpfen oder Gasen aufnehmbar ist, wobei das Verfahren folgende Schritte aufweist:

- in Verbindung setzen des zu ventilierenden Volumens ($V_v$) mit der Umgebung;
- Berechnen einer Flussrate ($Q_{dan}$) der explosiven Mischung, die in flüssiger und / oder fester Phase durch die entzündlichen Substanzen bei Kontakt mit dem zu ventilierenden Volumen ($V_v$) emittiert werden;
- Betätigen eines Pumpkreislaufs (20) zum Ansaugen einer Einlass-Flussrate ($Q_p$) aus dem zu ventilierenden Volumen ($V_v$);
- Aufrechterhalten der Einlass-Flussrate ($Q_p$) über eine Entleerdauer ($t_c$), die mittels der folgenden Beziehung berechnet wird:

$$t_c \geq \frac{V_v \cdot n}{Q_p - Qdan} \cdot \frac{1}{60} \qquad\qquad (B)$$

wobei n eine Zahl für die Entleerung größer oder gleich 10 ist.

**2.** Verfahren gemäß Anspruch 1, wobei das zu ventilierende Volumen ($V_v$) ein oberer Teil (2a) eines Tanks (2) des Fahrzeugs (1) ist, wobei der Schritt, den oberen Teil (2a) mit der Umgebung in Verbindung zu setzen, durch Öffnen eines Entleerungsventils (12) oder eines Bodens (5) des Tanks (2) ausgeführt wird und der Pumpkreislauf (20) mit dem oberen Teil (2a) durch Öffnen eines Abfangventils (14) in Verbindung gebracht wird.

**3.** Verfahren gemäß Anspruch 1, wobei das zu ventilierende Volumen ($V_v$) das Gesamtvolumen ($V_l$) eines zu ventilierenden Rohrs ist, wobei der Schritt, das zu ventilierende Volumen ($V_l$) mit der Umgebung in Verbindung zu setzen, durch Öffnen eines zweiten Entleerungsventils (16) ausgeführt wird und der Pumpkreislauf (20) eines Tanks (2), der die entzündlichen Substanzen enthält, durch Schließen eines Abfangventils (14) isoliert wird.

**4.** Verfahren gemäß Anspruch 2, wobei das Verfahren weiter die Schritte aufweist, den Pumpkreislauf (20) anzuhalten und den Tank (2) zu leeren.

**5.** Verfahren gemäß Anspruch 4, wobei zwischen den Schritten, den Pumpkreislauf (20) anzuhalten und den zu Tank (2) leeren, ein Schritt vorgesehen ist, zu warten, während der Tank (2) von der Umgebung isoliert wird, wobei der Schritt des Wartens über eine maximale Wartezeit ($t_a$) gehalten wird, die mittels folgender Beziehung berechnet wird:

$$t_a = \frac{V_v}{Qdan} \qquad \text{(C)}$$

**Revendications**

**1.** Procédé pour gérer de manière sûre des substances inflammables contenues dans un véhicule de transport (1), ledit véhicule (1) comprenant au moins un volume à ventiler ($V_v$) susceptible de contenir un mélange de vapeurs ou de gaz explosifs, ledit procédé comprenant les étapes consistant à :

- mettre ledit volume à ventiler ($V_v$) en communication avec l'atmosphère ;
- calculer un débit d'écoulement de mélange explosif ($Q_{dan}$) émis en une phase liquide et/ou solide par lesdites substances inflammables en contact avec ledit volume à ventiler ($V_v$) ;
- actionner un circuit de pompage (20) pour aspirer un débit d'écoulement d'admission ($Q_p$) à partir dudit volume à ventiler ($V_v$) ;
- maintenir ledit débit d'admission ($Q_p$) pendant un temps de purge ($t_c$) calculé au moyen du rapport suivant :

$$t_c \geq \frac{V_v \cdot n}{Q_p - Qdan} \cdot \frac{1}{60} \qquad \text{(B)}$$

où n est un nombre de purge supérieur ou égal à 10.

**2.** Procédé selon la revendication 1, dans lequel ledit volume à ventiler ($V_v$) est une partie supérieure (2a) d'un réservoir (2) dudit véhicule (1), dans lequel ladite étape de mise en communication de ladite partie supérieure (2a) avec l'atmosphère est actionnée en ouvrant une vanne de purge (12) ou un fond (5) dudit réservoir (2) et dans lequel ledit circuit de pompage (20) est mis en communication avec ladite partie supérieure (2a) en ouvrant une vanne d'interception (14).

**3.** Procédé selon la revendication 1, dans lequel ledit volume à ventiler ($V_v$) est le volume total ($V_l$) d'une conduite à ventiler, dans lequel ladite étape de mise en communication dudit volume à ventiler ($V_l$) avec l'atmosphère est activée en ouvrant une seconde vanne de purge (16) et dans lequel ledit circuit de pompage (20) est isolé d'un réservoir (2) contenant lesdites substances inflammables en fermant une vanne d'interception (14).

**4.** Procédé selon la revendication 2, dans lequel ledit procédé comprend les étapes supplémentaires consistant à arrêter ledit circuit de pompage (20) et à vider ledit réservoir (2).

**5.** Procédé selon la revendication 4, dans lequel une étape d'attente dans laquelle ledit réservoir (2) est isolé de l'atmosphère externe est prévue entre lesdites étapes d'arrêt dudit circuit de pompage (20) et de vidage dudit réservoir (2), ladite étape d'attente étant maintenue pendant un temps d'attente maximal ($t_a$) calculé au moyen du rapport suivant :

$$t_a = \frac{V_v}{Qdan} \qquad \text{(C)}$$

Fig. 1

Fig. 2

REFERENCES CITED IN THE DESCRIPTION

**Patent documents cited in the description**

- FR 2839493